# EUROPÄISCHE PATENTANMELDUNG

(11) **EP 1 643 269 A1**
(43) Veröffentlichungstag der Anmeldung: **05.04.2006**
(21) Anmeldenummer: 05106651.2
(22) Anmeldetag: 20.07.2005
(51) Int. Cl.: G01S 13/93

(54) **Fahrerassistenzsystem mit Fuzzy-Logic**

(30) Priorität: 29.09.2004 DE 102004047084
(71) Anmelder: ROBERT BOSCH GMBH, 70442 Stuttgart (DE)
(72) Erfinder: Trautmann, Toralf, 70839 Gerlingen (DE)

(57) **Zusammenfassung**

Fahrerassistenzsystem für Kraftfahrzeuge, mit einem Ortungssystem (30, 32) zur Ortung von Fahrzeugen in der Umgebung des eigenen Fahrzeugs, mindestens einem Assistenzmodul (42, 44) zur Ausführung einer Asstistenzfunktion, und einer Erkennungseinrichtung (46) zur Erkennung mindestens einer typischen, für die Assistenzfunktion relevanten Verkehrssituation anhand von Ortungsdaten (OD) des Ortungssystems, dadurch gekennzeichnet, daß die Erkennungseinrichtung (46) ein Fuzzy-Logiksystem (56) aufweist.

## Beschreibung

### Stand der Technik

Die Erfindung betrifft ein Fahrerassistenzsystem für Kraftfahrzeuge, mit einem Ortungssystem zur Ortung von Fahrzeugen in der Umgebung des eigenen Fahrzeugs, mindestens einem Assistenzmodul zur Ausführung einer Assistenzfunktion, und einer Erkennungseinrichtung zur Erkennung mindestens einer typischen, für die Assistenzfunktion relevanten Verkehrssituation anhand von Ortungssdaten des Ortungssystems.

Kraftfahrzeuge werden zunehmend mit Fahrerassistenzsystemen ausgerüstet, die den Fahrer bei der Führung des Fahrzeugs unterstützen. Ein Beispiel eines solchen Assistenzsystems ist ein radargestütztes Abstandsregelsystem, mit dem die Fahrzeuggeschwindigkeit automatisch so geregelt wird, daß ein geeigneter Sicherheitsabstand zu dem auf der eigenen Fahrspur unmittelbar vorausfahrenden Fahrzeug eingehalten wird. Generell benötigten solche Assistenzsysteme ein Objektortungssystem zur Erfassung des Verkehrsumfelds. Das Objektortungssystem kann neben einem oder mehreren Radarsensoren beispielsweise auch Lidarsensoren, Videosysteme mit elektronischer Bildverarbeitung dergleichen sowie Kombinationen solcher Sensorsysteme umfassen.

Während die bisher im Einsatz befindlichen Abstandsregelsysteme zumeist nur für den Einsatz auf Schnellstraßen vorgesehen sind, gehen neuere Entwicklungstendenzen dahin, den Anwendungsbereich solcher Systeme auf Situationen auszudehnen, die durch eine größere Dynamik des Verkehrsgeschehens gekennzeichnet sind, bis hin zum Stadtverkehr. Dabei gewinnt die möglichst frühzeitige Erkennung von Ein- und Ausschervorgängen anderer Fahrzeuge zunehmend an Bedeutung. Durch eine möglichst frühzeitige und zuverlässige Erkennung von Ein- und Ausschervorgängen wird das Assistenzsystem in die Lage versetzt, rechtzeitig eine angemessene Reaktion auszulösen, beispielsweise eine Anpassung der Geschwindigkeit des eigenen Fahrzeugs oder die Ausgabe einer Kollisionswarnung an den Fahrer oder die Aktivierung von Sicherheitsfunktionen im Rahmen eines Pre-Crash-Systems. In diesem Zusammenhang ist es wünschenswert, auch andere typische Verkehrsituationen automatisch erkennen zu können. Beispielsweise sollte bei akut drohender Kollisionsgefahr mit einem Hindernis erkannt werden können, ob die Verkehrsituation eine Umfahrung des Hindernisses zuläßt.

Bei bekannten radargestützten Abstandsregelsystemen wird zur Objektortung ein winkelauflösender Radarsensor eingesetzt, mit dem Abstände und Relativgeschwindigkeiten vorausfahrender Fahrzeuge direkt gemessen werden können. Aufgrund des Winkelauflösungsvermögens des Radarsensors kann auch der Azimutwinkel der Objekte gemessen werden, und aus diesem läßt sich dann anhand des gemessenen Abstands (x-Koordinate) die Querablage (y-Koordinate) des Objekts in Bezug auf die eigene Fahrspur berechnen. Ergänzend kann das Objektortungssystem ein Bildverarbeitungssystem aufweisen, das eine genauere Bestimmung der y-Koordinate ermöglicht und auch Informationen über die jeweilige Breite der georteten Objekte liefert. Anhand der gemessenen oder berechneten Querposition des Objekts wird entschieden, ob sich das Objekt auf der eigenen Fahrspur oder auf einer Nachbarspur befindet. Für die Breite der Fahrspuren wird dabei eine plausible Annahme zugrunde gelegt, sofern nicht, etwa durch Bildverarbeitung, eine direkte Bestimmung der Spurbreite erfolgt. Es sind auch Systeme bekannt, die es gestatten, durch Bildverarbeitung oder aufgrund fahrdynamischer Daten des eigenen Fahrzeugs den ggf. gekrümmten Verlauf der Fahrspuren zu bestimmen oder vorherzusagen.

Von den Objekten, die in dieser Weise als Objekte auf der eigenen Fahrspur identifiziert wurden, wird in der Regel dasjenige, das den kürzesten Abstand aufweist, als Zielobjekt für die Abstandsregelung ausgewählt, während Objekte auf Nachbarspuren bei der Abstandsregelung ignoriert werden. Ein Einschervorgang, bei dem ein vorausfahrendes Fahrzeug von einer Nachbarspur auf die eigene Fahrspur wechselt, wird erkannt, wenn dieses Objekt erstmals innerhalb der (voraussichtlichen) eigenen Fahrspur, dem sogenannten Fahrschlauch, lokalisiert wird, und ggf. wird dieses Objekt dann als Zielobjekt ausgewählt. Das bedeutet, daß das Assistenzsystem erst dann auf das einscherende Fahrzeug reagieren kann, wenn dieses Fahrzeug bereits in den Fahrschlauch eingetreten ist.

In der älteren Anmeldung DE 10 2004 013818.4 der Anmelderin wird ein System zur Erkennung von Einschervorgängen vorgeschlagen, das auf einem Zustandsautomaten basiert.

DE 196 24 615 A1 beschreibt ein Fahrerassistenzsystem, bei dem der Regelalgorithmus zur Abstandsregelung auf Fuzzy-Logic basiert. Ein Erkennungssignal für den Einschervorgang bildet dabei eine der Eingangsgrößen, die von der Fuzzy-Logic verarbeitet werden.

Aus DE 195 27 323 A1 ist es bekannt, Fuzzy-Logic zur Unterscheidung von Fahrsituationen wie Fahrt auf einer Autobahn, Stadtverkehr und dergleichen einzusetzen.

### Vorteile der Erfindung

Die Erfindung mit den in Anspruch 1 angegebenen Merkmalen ermöglicht es, Verkehrssituationen wie Ein- und Ausschervorgänge anhand der aktuell vom Ortungssystem gelieferten Daten schnell und sicher zu erkennen, so daß das Assistenzsystem frühzeitiger und angemessener reagieren kann. Besonders vorteilhaft ist dabei, daß die Erkennungseinrichtung zur Erkennung typischer Verkehrssituationen eine hohe Flexibilität aufweist, so daß sie sich einfach und in übersichtlicher Weise an den jeweiligen Bedarf anpassen läßt und einfach erweitert werden kann, etwa um zusätzliche Eingangsgrößeren zu berücksichtigen, die Verkehrssituation differenzierter zu bewerten oder - im Hinblick auf neue Funktionen des Assistenzsystems - das Spektrum der erkennbaren Verkehrssituationen zu erweitern.

Erfindungsgemäß wird ein Fuzzy-Logiksystem dazu eingesetzt, eine oder mehrere vorgegebene typische Verkehrssituationen zu erkennen, d.h., anhand der vom Ortungssystem gelieferten Ortungsdaten zu entscheiden, ob die betreffende Verkehrssituation vorliegt oder nicht. Dazu werden, wie es bei Fuzzy-Logiksystemen üblich ist, die Eingangsgrößen, also die Ortungsdaten wie etwa Ortskoordinaten und Geschwindigkeiten der georteten Fahrzeuge, fuzzifiziert, d.h., die "scharfen", quantitativ gemessenen Eingangsgrößen werden sogenannten Fuzzy-Sets zugeordnet, die die gemessene Größe qualitativ beschreiben, und die Eingangsgrößen werden mit vordefinierten Zugehörigkeitsfunktionen in "unscharfe" Fuzzy-Größen transformiert, die die Zugehörigkeit zu den Elementen des Fuzzy-Sets angeben und typischerweise einen Wertebereich zwischen 0 und 1 haben. Die Fuzzy-Sets sind über eine Regelbasis nach den Prinzipien der Fuzzy-Logic mit einer unscharfen Zielfunktion verknüpft, der ebenfalls ein Fuzzy-Set zugeordnet ist. Durch Fuzzy-Inferenz wird dann die unscharfe Zielfunktion defuzzifiziert, so daß man eine scharfe Ausgangsgröße enthält, etwa in der Form einer Ja/Nein-Aussage oder eines durch einen Zahlenwert beschreibbaren Parameters, die das Vorliegen oder Nicht-Vorliegen der betreffenden Verkehrssituation bzw. das Ausmaß, in dem die Verkehrssituation verwirklicht ist, oder die Möglichkeit angibt, mit der die Verkehrssituation vorliegt, und die dann zur weiteren Verarbeitung an das Assistenzmodul übergeben wird.

Bei herkömmlichen Fahrerassistenzsystemen erfolgt die Erkennung der relevanten Verkehrssituation oder Situationen direkt im Assistenzmodul, durch Überprüfung eines Satzes vorgegebener Kriterien wie Schwellenwertkriterien und dergleichen. Bei Verkehrssituationen, zu deren Erkennung eine Vielzahl von Eingangsgrößeren benötigt wird, ergibt sich so ein relativ komplexer und schwer durchschaubarer Entscheidungsbaum, und die Komplexität wird dadurch weiter erhöht, daß die verschiedenen Kriterien wechselseitig voneinander abhängig sind. Um die Komplexität in Grenzen zu halten, muß daher mit verhältnismäßig groben Kriterien gearbeitet werden, was jedoch den Nachteil hat, daß die Verkehrssituation oft erst mit beträchtlicher Verzögerung sicher erkannt werden kann. Die hier vorgeschlagene Lösung hat demgegenüber den Vorteil, daß sämtliche Eingangsgrößen durch die Fuzzy-Logik auf einmal ausgewertet werden, wobei die wechselseitige Abhängigkeit der Eingangsgrößen und Kriterien inhärent in der Regelbasis implementiert ist, so daß die Ausgangsgröße empfindlicher auf Änderungen der Eingangsgrößen anspricht und somit eine schnellere Erkennung der jeweiligen Verkehrssituation ermöglicht. Dies erweist sich bei der Erkennung von Verkehrssituationen in einem durch hohe Dynamik gekennzeichneten Umfeld als überaus vorteilhaft.

Wenn das Ortungssystem um zusätzliche Sensoren erweitert wird, lassen sich die zusätzlich erhaltenen Eingangsgrößen durch entsprechende Ergänzung der Regelbasis problemlos integrieren. Ebenso lassen sich durch Ergänzung der Regelbasis zusätzliche Ausgangsgrößen bilden, um zusätzliche Verkehrssituationen zu erkennen. Dabei besteht auch die vorteilhafte Möglichkeit, eine unscharfe Zielfunktion, die zur Erkennung einer bestimmten Verkehrssituation definiert wurde, unmittelbar als unscharfe Eingangsgröße für eine andere Zielfunktion zu verwenden, die zur Erkennung einer anderen Verkehrssituation dient. Auf diese Weise können Zwischenschritte zur Defuzzifizierung und Fuzzifizierung eingespart werden.

Vorteilhafte Weiterbildungen und Ausgestaltungen der Erfindung ergeben sich aus den Unteransprüchen.

Besonders zweckmäßig ist das Fuzzy-Logiksystem zur Erkennung von Ein- und Ausschervorgängen. Es können jedoch auch vielfältige andere Verkehrssituationen erkannt und bewertet werden, beispielsweise das Vorliegen einer akuten Kollisionsgefahr, einschl. der Entscheidung, ob eine Möglichkeit besteht, das Hindernis zu umfahren.

Vorzugsweise umfaßt das Ortungssystem mindestens einen winkelauflösenden Radarsensor, mit dem die Abstände und Relativgeschwindigkeiten sowie die Querablagen vorausfahrender Fahrzeuge und, durch Ableitung der Querablage nach der Zeit, auch die Quergeschwindigkeiten der vorausfahrenden Fahrzeuge ermittelt werden können. Als Eingangsgrößen für die Erkennung von Ein- und Ausschervorgängen und Umfahrungsmöglichkeiten eignen sich dann insbesondere die Querablagen und Quergeschwindigkeiten. Eine weitere nützliche Eingangsgröße ist die Breite der georteten Objekte oder, äquivalent dazu, die Querablage der linken und rechten Ränder der Objekte. Diese Größen lassen sich mit Hilfe eines Radarsensors mit hinreichender Winkelauflösung oder ggf. durch Einsatz eines ergänzenden Video- und Bildverarbeitungssystems ermitteln. Durch Bildverarbeitung können auch die Fahrspurgrenzen erkannt werden, so daß sich entscheiden läßt, ob sich ein geortetes Objekt auf der eigenen Spur oder auf der linken oder rechten Nebenspur befindet.

Sofern durch Bildverarbeitung und/oder anhand fahrdynamischer Daten des eigenen Fahrzeugs die Querbewegung des eigenen Fahrzeugs und die Querposition des eigenen Fahrzeugs relativ zu den Fahrspurgrenzen festgestellt werden können, ist es zweckmäßig, die als Eingangsgrößen dienenden Querablagen und Quergeschwindigkeiten der anderen Fahrzeuge geeignet aufzubereiten, indem sie zu der Querbewegung und -position des eigenen Fahrzeugs in Beziehung gesetzt werden.

Die Regelbasis sollte vorzugsweise so definiert sein, daß die der Entscheidung zugrundeliegenden Regeln für den gesamten interessierenden Geschwindigkeitsbereich und alle im Normalverkehr auftretenden Geschwindigkeiten der anderen Fahrzeuge gültig sind. Gegebenenfalls können die Relativgeschwindigkeiten der georteten Fahrzeuge und die Geschwindigkeit des eigenen Fahrzeuges auch als Eingangsgrößen Berücksichtigung finden, so daß in der Regelbasis eine Adaption auf die jeweilige Geschwindigkeit implementiert werden kann.

Gemäß einer zweckmäßigen Weiterbildung der Erfindung ist das Fuzzy-Logiksystem in der Erkennungseinrichtung mit einem Zustandsautomaten kombiniert. Unter einem Zustandsautomaten versteht man ein Datenverarbeitungssystem, das einer Anzahl von Objekten, in diesem Fall den georteten Fahrzeugen, jeweils einen von mehreren Zuständen zuweist, wobei ein System von Regeln für jeden Zustand bestimmt, in welche anderen Zustände das Objekt aus dem aktuellen Zustand wechseln kann und unter welchen Bedingungen ein solcher Wechsel erfolgt. Die vordefinierten Zustände beziehen sich bei dem erfindungsgemäßen System auf die aktuelle oder voraussichtliche Position des Objekts in Bezug auf die Fahrspuren der Fahrbahn. Die Bedingungen für einen Zustandswechsel beinhalten Kriterien, die sich auf die Ortungsdaten des betreffenden Objekts beziehen, insbesondere dessen Querposition und/oder die zeitliche Änderung der Querposition. Die Zustände der Objekte werden jeweils anhand der neuesten Ortungsdaten aktualisiert. Mindestens einer der vordefinierten Zustände ist ein Übergangszustand, der einen Ein-oder Ausschervorgang kennzeichnet, also ein Zustand, in dem das Objekt im Begriff ist, in den Fahrschlauch einzutreten bzw. den Fahrschlauch zu verlassen.

Der Fahrschlauch ist definiert durch die linken und rechten Grenzen der eigenen Fahrspur. Im einfachsten Fall werden diese Grenzen bestimmt, indem für die Breite der Fahrspur ein Standardwert zugrunde gelegt wird und angenommen wird, daß sich das eigene Fahrzeug auf der Mitte der Fahrspur befindet. Sofern ein Bildverarbeitungssystem vorhanden ist, können die Grenzen des Fahrschlauches auch anhand der Fahrbahnmarkierungen bestimmt werden. Eine weitere Möglichkeit ist die statistische Auswertung der Querpositionen von Fahrzeugen auf den linken und rechten Nebenspuren unter der Annahme, daß der statistische Mittelwert der Querpositionen für die Fahrzeuge auf einer Nebenspur annähernd der Mitte dieser Nebenspur entspricht.

Es sind auch bereits verschiedene Verfahren zur Prädiktion der Krümmung des Fahrschlauches bekannt. Eines dieser Verfahren beruht auf der Auswertung von fahrdynamischen Daten des eigenen Fahrzeugs, beispielsweise der Querbeschleunigung oder der Giergeschwindigkeit in Verbindung mit der Absolutgeschwindigkeit. Andere Verfahren beruhen wieder auf der statistischen Auswertung der Querpositionen und der Änderungen der Querpositionen vorausfahrender Fahrzeuge. Im Fall eines Radar-Ortungssystems ist es auch möglich, die Signale von stationären Radarzielen am Fahrbahnrand, beispielsweise von Leitplankenpfosten oder dergleichen, zur Bestimmung der Krümmung des Fahrschlauches heranzuziehen.

Da der Zustandsautomat durch Verfolgung der Zustände der verschiedenen Objekte in gewissem Umfang auch die Historie des Verkehrsgeschehens berücksichtigt, bietet er bei der Erkennung der Verkehrssituation eine hohe Verläßlichkeit. Durch die erfindungsgemäße Kombination lassen sich somit der Vorteil der hohen Empfindlichkeit des Fuzzy-Logiksystems und der Vorteil der hohen Verläßlichkeit des Zustandsautomaten miteinander verbinden.

Besonders bevorzugt ist es dabei, wenn die (vorläufige) Erkennung eines Ein- oder Ausschervorgangs mit Hilfe des Fuzzy-Logiksystem als Auslöser für die genauere Erkennung des Ein-oder Ausschervorgangs mit Hilfe des Zustandsautomaten benutzt wird. Weiterhin lassen sich die Ausgangsgrößen des Fuzzy-Logiksystems auch innerhalb des Zustandsautomaten zur Definition der Zustände sowie bei der Verfolgung von Zustandsänderungen einsetzen.

### Zeichnung

Ausführungsbeispiele der Erfindung sind in den Zeichnungen dargestellt und in der nachfolgenden Beschreibung näher erläutert.

Es zeigen:
- Figur 1: ein Blockdiagramm eines erfindungsgemäßen Fahrerassistenzsystems;
- Figur 2: ein Diagramm zur Erläuterung der Arbeits weise des Systems;
- Figuren 3 bis 5: Diagramme von Zugehörigkeitsfunktionen zu Fuzzy-Sets;
- Figur 6: ein Beispiel einer Regelbasis;
- Figuren 7 bis 9: Diagramme einer Messung zur Erkennung eines Einschervorgangs durch Fuzzy-Logic; und
- Figur 10: einen Zustandsautomaten zur Erkennung von Einschervorgängen gemäß einer anderen Ausführungsform der Erfindung.

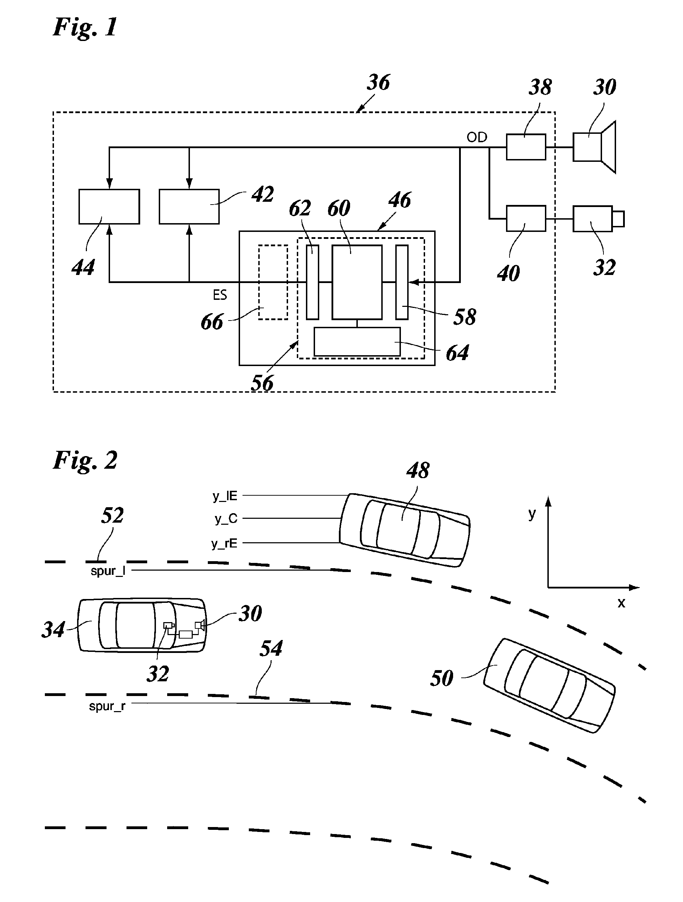

Das in Figur 1 gezeigte Fahrerassistenzsystem umfaßt ein Ortungssystem, das im gezeigten Beispiel durch einen Radarsensor 30 und eine Videokamera 32 gebildet wird, die so in ein Fahrzeug 34 (Figur 2) eingebaut sind, daß sie das Vorfeld des Fahrzeugs beobachten. Weiterhin gehört zu dem Fahrerassistenzsystem ein elektronisches Datenverarbeitungssystem 36, das beispielsweise durch einen oder mehrere Mikrorechner und zugehörige Software gebildet wird. Das Datenverarbeitungssystem umfaßt eine Datenaufbereitungseinheit 38 für die Daten des Radarsensors 30, eine Bildverarbeitungseinheit 40 für die von der Videokamera 32 aufgenommenen Bilder, zwei Assistenzmodule 42, 44 und eine Erkennungseinrichtung 46, die dazu dient, typische Verkehrsituationen wie Ein- und Ausschervorgänge und dgl. zu erkennen.

Die Datenaufbereitungsseinheit 38 berechnet anhand der vom Radarsensor 30 gelieferten Signale die Ortungsdaten der vom Radarsensor georteten Objekte, insbesondere vorausfahrender Fahrzeuge 48, 50 (Figur 2). Bei diesen Ortungsdaten handelt es sich um die Abstände und Relativgeschwindigkeiten der Objekte sowie die Azimutwinkel, unter denen die Objekte in bezug auf die Längsachse des Fahrzeugs erscheinen. Diese Ortungsdaten werden periodisch in einem vorbestimmten Taktzyklus gemessen. Die Bildverarbeitungseinheit 40 extrahiert aus den Bilddaten zusätzliche Information, die sich auf die Geometrie der georteten Objekte sowie auf die Fahrbahngeometrie beziehen. Die von der Datenaufbereitungseinheit 38 und der Bildverarbeitungseinheit 40 gelieferten Daten, die hier zusammenfassend als Ortungsdaten OD bezeichnet werden sollen, werden an die Assistenzmodule 42, 44 übermittelt und bilden dort die Grundlage für die Ausführung verschiedener Assistenzfunktionen, beispielsweise einer Abstandsregelung (ACC; Adaptive Cruise Control), einer Pre-Crash-Funktion, die etwa zur automatischen Einleitung einer Notbremsung dient und/oder zur Vorbereitung auf einen bevorstehenden Aufprall passive Sicherheitssysteme wie Gurtstraffer und Airbags aktiviert. Weitere Beispiele für Assistenzfunktionen, die in dem System implementiert sein könnten, sind ein Stauassistent, der das Fahrzeug bei einem Auffahren auf ein Stauende automatisch in den Stand bremst und ggf. auch das automatische Wiederanfahren des Fahrzeugs steuert, sowie ein Spurführungssystem (LKS; Lane Keeping Sytem), das in die Lenkung des Fahrzeugs eingreift um das Fahrzeug automatisch auf der Spurmitte zu halten.

Das Verhalten dieser Assistenzfunktionen ist von der jeweiligen Verkehrssituation abhängig. Insbesondere sind diese Funktionen so programmiert, daß sie auf spezifische Verkehrssituationen, die von der Erkennungseinrichtung 46 erkannt werden, angemessen reagieren. Zu diesem Zweck wertet die Erkennungseinrichtung 46 unabhängig von den Assistenzmodulen die Ortungsdaten OD aus, um zu entscheiden, welche Verkehrssituation aktuell vorliegt. Die Verkehrssituationen sind in der Erkennungseinrichtung 46 durch charakteristische Merkmale der Ortungsdaten (und ggf. zusätzlicher Informationen) definiert, und entsprechende Erkennungssignale ES zur Kennzeichnung der aktuellen Verkehrssituation werden an die Assistenzmodule 42, 44 übergeben.

In Figur 2 sind das mit dem Fahrerassistenzsystem ausgerüstete Fahrzeug 34 und zwei weitere Fahrzeuge 48, 50 schematisch in einem x-y-Koordinatensystem dargestellt. Die x-Achse verläuft in Fahrtrichtung, also in Richtung der Längsachse des Fahrzeugs 34, und die y-Achse verläuft rechtwinklig dazu. Weiterhin sind in Figur 2 die Spurgrenzen 52, 54 eingezeichnet, die die linken und rechten Grenzen des Fahrschlauches, d. h., der von dem Fahrzeug 34 befahrenen Fahrspur angeben.

Der Radarsensor 30 empfängt Radarechos von der Rückfront der Fahrzeuge 48, 50, aus denen sich der Abstand x und die Relativgeschwindigkeit (in x-Richtung) sowie der Azimutwinkel der Fahrzeuge, genauer, eines nicht näher bekannten Reflexionszentrums an der Rückfront des Fahrzeugs berechnen lassen. Aus dem Abstand und dem Azimutwinkel läßt sich auch ein ungefährer Wert für die Querpositionen, d. h. die y-Koordinaten y_C der Fahrzeuge 48, 50 berechnen.

Die Bildverarbeitungseinheit 42 liefert genauere Werte y_1E und y_rE für die y-Koordinaten der linken und rechten Kanten der Fahrzeuge. Außerdem wird durch Bildverarbeitung der Verlauf der Spurgrenzen 52, 54 jeweils als Funktion y(x) berechnet.

Die Größen spur_1 und spur_r geben die Lage der Spurgrenzen 52, 54 am Ort des jeweiligen Fahrzeugs (z. B. 50) an. In der Erkennungseinrichtung 46 werden diese Größen mit y_1E und y_rE verglichen, um zu entscheiden, auf welcher Spur der Fahrbahn sich das Fahrzeug befindet.

In dieser Weise werden durch die Erkennungseinrichtung 46 periodisch die Ortungsdaten aller georteten Objekte (Fahrzeuge) ausgewertet. Der Auswertezyklus der Erkennungseinrichtung 46 kann vom Meßzyklus der Datenaufbereitungseinheit 38 und der Bildverarbeitungseinheit 40 verschieden sein, kann jedoch auch damit synchronisiert sein, so daß die Auswertung immer dann erfolgt, wenn neue Ortungsdaten vorliegen.

In der in Figur 2 gezeigten Situation ist z.B. zu entscheiden, ob das auf der linken Nebenspur fahrende Fahrzeug 48 auf die eigene Fahrspur des Fahrzeugs 34 einschert. Falls das auf der eigenen Fahrspur vorausfahrende Fahrzeug 50 in einen Unfall verwickelt ist oder aus einem anderen Grund plötzlich anhält, ist für das Fahrzeug 34 zu entscheiden, ob akute Kollisionsgefahr besteht und eine Notbremsung einzuleiten ist. Dabei ist von Bedeutung, ob eine Möglichkeit besteht, das Fahrzeug 50 auf der linken oder rechten Nebenspur zu umfahren. Es muß deshalb entschieden werden, ob die linke und/oder rechte Nebenspur frei ist und frei bleiben oder frei werden wird und, falls weitere Fahrzeuge in Höhe des Fahrzeugs 50 vorhanden sind, ob die Lücke zwischen diesen Fahrzeugen in y-Richtung groß genug für das Fahrzeug 34 ist. Die Erkennungseinrichtung 46 ist insbesondere für die Erkennung solcher Verkehrssituationen ausgebildet. Im folgenden soll als stellvertretendes Beispiel die Erkennung von Einschervorgängen näher erläutert werden. Die Erkennung einer Umfahrungsmöglichkeit erfolgt nach dem gleichen Prinzip, nur mit dem Unterschied, daß diese Verkehrssituation durch einen anderen Satz von Regeln definiert ist.

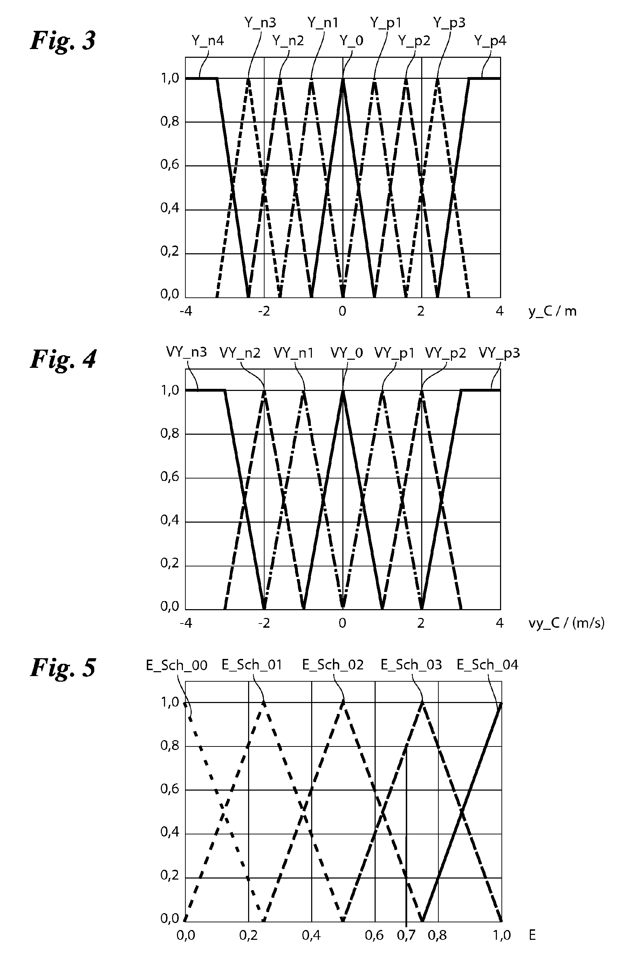

Figuren 3 bis 6 illustrieren die Erkennung eines Einschervorgangs, beispielsweise für das Fahrzeug 48. In diesem einfachen Beispiel werden als Eingangsgrößen lediglich die Querablage y_C (y-Koordinate des Reflexionszentrums) dieses Fahrzeugs sowie deren zeitliche Ableitung vy_C ausgewertet. Dabei wird für die Breite des Fahrzeugs 48 eine Standardbreite mit einem ausreichenden Sicherheitszuschlag angenommen. Der Einfachheit halber sei weiter angenommen, daß die eigene Fahrspur eine bestimmte Standardbreite hat und das eigene Fahrzeug 34 in der Mitte dieser Fahrspur fährt und die Quergeschwindigkeit 0 hat. Die Eingangsgrößen können daher unmittelbar in m bzw. ms angegeben werden.

Für die Querablage Y_C ist ein Fuzzy-Set definiert, dessen Elemente die folgenden Bedeutungen haben:
- Y_n4:: Fahrzeug ist auf der rechten Nebenspur
- Y_n3:: Fahrzeug ist nahe des Innenrandes der rechten Nebenspur (nahe der Spurgrenze 54)

- Y_n2:: Fahrzeug ist auf der rechten Spurgrenze
- Y_n1:: Fahrzeug ist auf der eigenen Spur, nahe der rechten Spurgrenze
- Y_0:: Fahrzeug ist auf der Mitte der eigenen Spur
- Y_p1:: Fahrzeug ist auf der eigenen Spur, nahe der linken Spurgrenze 52
- Y_p2:: Fahrzeug ist auf der linken Spurgrenze
- Y_p3:: Fahrzeug ist nahe des Innenrandes der linken Nebenspur
- Y_p4:: Fahrzeug ist auf der linken Nebenspur

Figur 3 zeigt für jedes Element des Fuzzy-Sets eine Zugehörigkeitsfunktion, die dem gemessenen Wert von y_C einen Zugehörigkeitswert zwischen 0 und 1 zuordnet. Im gezeigten Beispiel haben die Zugehörigkeitsfunktionen für y_n4 und y_p4 die Form einer fallenden bzw. steigenden Rampe, und die anderen Zugehörigkeitsfunktionen haben die Form eines gleichschenkligen Dreiecks mit bestimmter Breite, und außerhalb des Dreiecks haben sie jeweils den Wert 0.

Figur 4 zeigt entsprechende Zugehörigkeitsfunktionen für die Eingangsgröße vy_C, die die Quergeschwindigkeit angibt. Auch dieser Eingangsgröße ist ein Fuzzy-Set zugeordnet, dessen Elemente die folgende Bedeutung haben:
- VY_n3:: Fahrzeug bewegt sich schnell nach rechts
- VY_n2:: Fahrzeug bewegt sich mit mäßiger Geschwindigkeit nach rechts

- VY_n1:: Fahrzeug bewegt sich langsam nach rechts
- VY_0:: Fahrzeug hat Quergeschwindigkeit 0
- VY_p1:: Fahrzeug bewegt sich langsam nach links
- VY_p2:: Fahrzeug bewegt sich mit mäßiger Geschwindigkeit nach links
- VY_p3:: Fahrzeug bewegt sich schnell nach links

Die Ausgangsgröße, die aus den oben beschriebenen Eingangsgrößen zu berechnen ist, gibt in diesem Fall an, ob, bzw. mit welcher Möglichkeit ein Einschervorgang vorliegt. Auch dieser Ausgangsgröße ist ein Fuzzy-Set zugeordnet, dessen Elemente die folgende Bedeutung haben:
- E_Sch_0:: kein Einschervorgang
- E_Sch_01:: Einscheren unsicher
- E_Sch_02:: Einscheren möglich
- E_Sch_03:: Einscheren fast sicher
- E_Sch_04:: Einscheren sicher

Figur 5 zeigt Zugehörigkeitsfunktionen, die die Elemente dieses Fuzzy-Sets zu einer defuzzifizierten ("scharfen") Ausgangsgröße E in Beziehung setzen, die auf einer Skala zwischen 0 und 1 die Möglichkeit des Einschervorgangs angibt.

Die Ausgangsgröße E bildet für den Fall der Erkennung eines Einschervorgangs das in Figur 1 gezeigte Erkennungssignal ES. Zur Berechnung dieser Ausgangsgröße weist die Erkennungseinrichtung 46 ein Fuzzy-Logiksystem 56 auf. Dieses Logiksystem umfaßt eine Fuzzyfizierungseinheit 58, in der die Eingangsgrößen in die Zugehörigkeitswerte umgerechnet werden, eine Logikeinheit 60, in der die Zugehörigkeitswerte nach den Regeln der Fuzzy-Logic miteinander verknüpft werden, um Zugehörigkeitswerte für die Ausgangsgröße zu bilden, eine Defuzzifizierungseinheit 62, die aus den verschiedenen Zugehörigkeitswerten des in Figur 5 gezeigten Fuzzy-Sets für die Ausgangsgröße die scharfe Ausgangsgröße E bildet, und eine Regelbasis 64, in der die Definitionen der zu erkennenden Verkehrssituationen sowie das zugehörige Expertenwissen in Form eines Satzes von logischen Schlußregeln gespeichert sind. Diese Schlußregeln bestimmen die Arbeitsweise der Logikeinheit 60 für die jeweilige Erkennungsaufgabe.

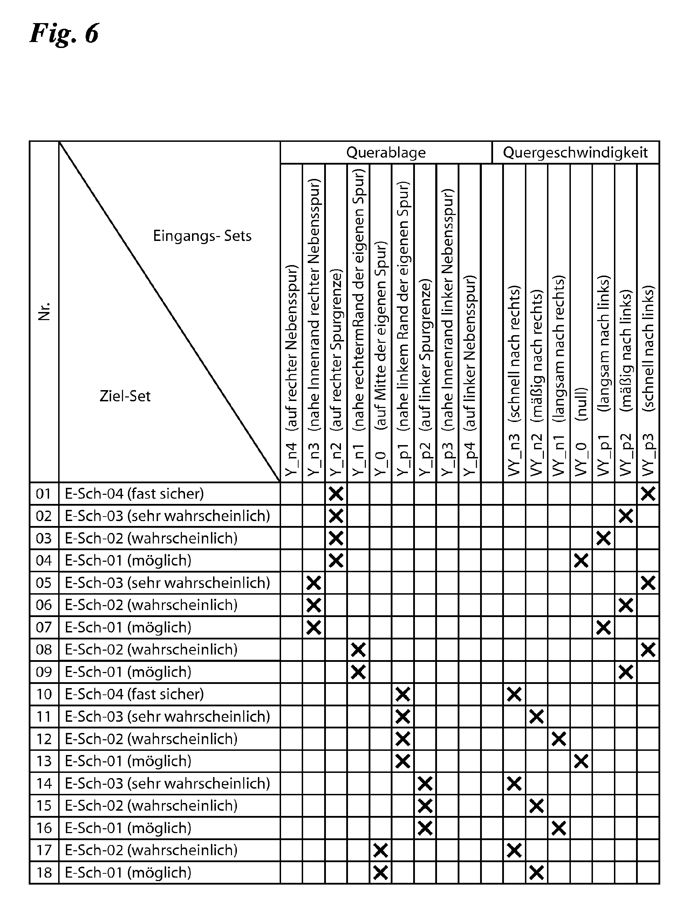

In Figur 6 ist die Regelbasis für die Erkennung eines Einschervorgangs in Tabellenform dargestellt. Die Spalten entsprechen den Fuzzy-Sets der Eingangsgrößen, und die Zeilen stellen einen Satz von - im gezeigten Beispiel 18 - Regeln dar, nach denen die Elemente der Fuzzy-Sets der Eingangsgrößen (Eingangs-Sets) mit den Elementen des Fuzzy-Sets der Ausgangsgröße (Ziel-Set) zu verknüpfen sind.

Jede einzelne Regel ist dabei eine Umsetzung einer Schlußregel, die sich in natürlicher Sprache formulieren läßt. In jeder Zeile der Tabelle geben die durch "X" markierten Positionen die Elemente der Eingangs-Sets an, die durch eine Fuzzy-UND-Verknüpfung zu einem Element des Ziel-Sets zu verknüpfen sind.

So bedeutet beispielsweise die Regel in Zeile 01 in natürlicher Sprache:
"Wenn das Fahrzeug sich auf der rechten Spurgrenze befindet UND sich schnell nach links bewegt, dann liegt sicher ein Einschervorgang vor."

Die Fuzzy-UND-Verknüpfung wird mathematisch beispielsweise dadurch realisiert, daß die entsprechenden Zugehörigkeitswerte (Y_n2 und VY_p3) multipliziert werden.

Wie Figur 6 zeigt, können sich mehrere Regeln auf dasselbe des Ziel-Set beziehen. So beziehen sich beispielsweise die Zeilen 03, 08, 12, 15 und 17 alle auf das Element E_Sch_02 ("wahrscheinlich"). Den Zugehörigkeitswert für das betreffende Element (in Figur 5 auf der senkrechten Achse angegeben) erhält man beispielsweise dadurch, daß die für die genannten Zeilen 03, 06, 12, 15 und 17 erhaltenen Zugehörigkeitswerte addiert werden und die Summe dann geeignet normiert wird. Entsprechend wird mit den übrigen Elementen des Ziel-Sets verfahren. Auf diese Weise erhält man für jedes der Elemente E_Sch_01 bis E_Sch_04 je einen Zugehörigkeitswert. Das in Figur 5 gezeigte Element E_Sch_00 braucht nicht berücksichtigt zu werden, da es zu der scharfen Ausgangsgröße E nichts beiträgt. Da sich die in Figuren 3 und 4 gezeigten Zugehörigkeitsfunktionen nur teilweise überlappen, sind stets einige der für das Ziel-Set erhaltenen Zugehörigkeitswerte gleich 0.

Für die mehreren von 0 verschiedenen Zugehörigkeitswerte wird dann in der Defuzzifizierungseinheit 62 durch Fuzzy-Interferenz ein eindeutiger Zahlenwert für die Ausgangsgröße E berechnet. Dazu sind in der Theorie der Fuzzy-Logic verschiedene Verfahren bekannt. Ein Beispiel ist in Figur 5 illustriert. In diesem Beispiel sei angenommen, daß für E_Sch_03 der Zugehörigkeitswert 0,8 erhalten wurde. Aus der entsprechenden Zugehörigkeitsfunktion ergibt sich, daß dann für E nur zwei Werte möglich sind, nämlich 0,7 und 0,8. Für E_Sch_02 wurde der Zugehörigkeitswert 0,2 gefunden, und alle übrigen Zugehörigkeitswerte sind 0. Aus der Zugehörigkeitsfunktion für E Sch_02 ergeben sich für E die möglichen Werte 0,25 und 0,7. Als endgültiger Wert für die Ausgangsgröße E wird dann der Wert gewählt, der mit beiden Zugehörigkeitsfunktionen konsistent ist, im gezeigten Beispiel also 0,7.

In der Praxis müssen die möglichen Werte von E nicht immer exakt übereinstimmen. Beispielsweise könnte der Zugehörigkeitswert für E_Sch_02 etwas kleiner sein als 0,2, so daß man als möglichen Wert statt 0,7 nur 0,68 erhält. Als Endergebnis für E würden dann unter den möglichen Werten diejenigen ausgewählt, die sich am wenigsten unterscheiden (hier also 0,68 und 0,7), und hieraus könnte der Mittelwert E = 0,69 gebildet werden. Das Ergebnis wäre also, daß das Fahrzeug 48 mit einer Möglichkeit von 69% ein Einscherer ist.

Sofern das Assistenzmodul 42 für die Entscheidung, ob die Geschwindigkeit des eigenen Fahrzeugs an die des Fahrzeugs 48 angepaßt werden soll oder nicht, eine eindeutige JA/NEIN Aussage benötigt, kann diese durch Vergleich mit einem geeigneten Schwellenwert (beispielsweise 45%) erhalten werden.

Auf analoge Weise lassen sich auch andere Verkehrssituationen erkennen, beispielsweise: "Das Fahrzeug ist (und bleibt vorerst) auf der linken Spur", "Das Fahrzeug ist auf der eigenen Spur.", "Das Fahrzeug schert aus." usw.

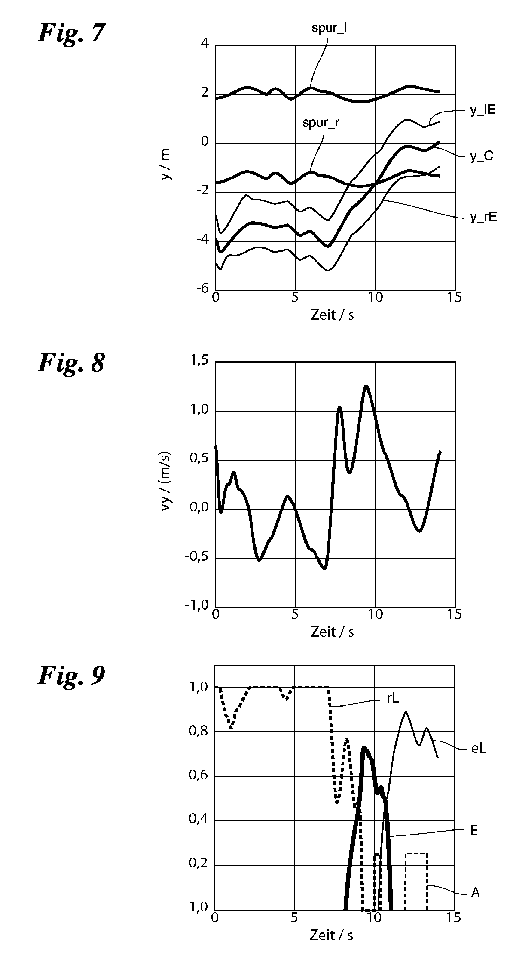

In Figuren 7 bis 9 ist eine Messung solcher Erkennungsvorgänge dargestellt. Hier soll - abweichend von dem zuvor beschriebenen Beispiel - angenommen werden, daß das Ortungssystem in der Lage ist, auch die y-Koordinaten der Spurgrenzen spur_1 und spur_r in Höhe des betrachteten Fahrzeugs sowie die y-Koordinaten der y_1E und y_rE der linken und rechten Ränder des Fahrzeugs zu messen. In Figur 7 ist der zeitliche Verlauf der Meßgrößen dargestellt. Das betrachtete Fahrzeug mit dem Reflexionszentrum bei y_C befindet sich zunächst auf der rechten Nebenspur und schert dann auf die eigene Spur ein. Figur 8 zeigt den zeitlichen Verlauf der Quergeschwindigkeit, berechnet durch Ableitung von y_C nach der Zeit.

Figur 9 zeigt den zugehörigen zeitlichen Verlauf von Ausgangsgrößen E, rL, eL und A, die mit dem Fuzzy-Logiksystem 56 berechnet wurden. Als Eingangsgrößen wurden dabei berücksichtigt die Querablage Y_C (bezogen auf die aktuelle Position der Spurgrenzen in Höhe des Fahrzeugs), die zugehörige Quergeschwindigkeit sowie die Koordinaten y_1E und y_rE der rechten und linken Grenzen des Fahrzeugs. Die Regelbasis enthält daher zwei zusätzliche Eingangs-Sets für die beiden zusätzlichen Eingangsgrößen sowie zusätzliche Regeln, die die Elemente dieser Sets mit den Elementen der übrigen Sets verknüpfen.

Wie ein Vergleich der Figuren 9 und 7 zeigt, erreicht die Ausgangsgröße E schon zu einem Zeitpunkt, bevor die Fahrzeugmitte (y_C) die rechte Sparmarkierung überschritten hat, einen Wert von deutlich über 60%. Dies bedeutet, daß der Einschervorgang bereits frühzeitig, also mit hoher Empfindlichkeit erkannt werden kann. Vor dem Einschervorgang hat die Ausgangsgröße rL einen Wert von 80 bis 100%, d.h., es wird sicher erkannt, daß sich das Fahrzeug auf der rechten Nebenspur befindet. Nach dem Einschervorgang gibt die Ausgangsgröße eL an, daß sich das Fahrzeug auf der eigenen Spur befindet. Da sich das Fahrzeug in dieser Phase jedoch zeitweise etwas nach rechts auf die Spurmarkierung zu bewegt, erkennt das System auch eine gewisse Möglichkeit, daß das Fahrzeug wieder ausschert (Ausgangsgröße A).

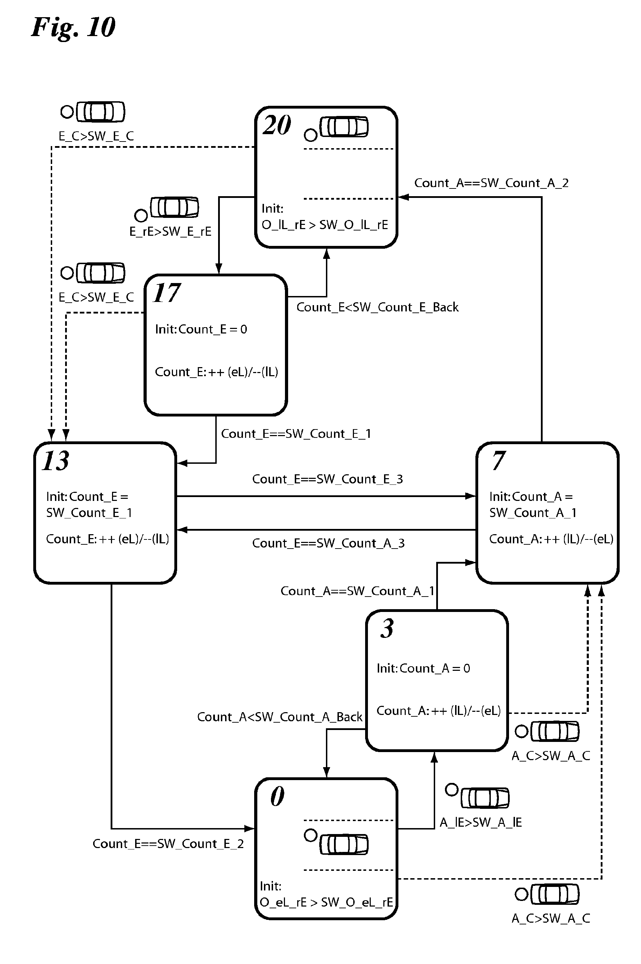

Während in den bisher beschriebenen Beispielen die von dem Fuzzy-Logiksystem 56 berechneten Ausgangsgrößen direkt als Erkennungssignale ES an die Assistenzmodule 42, 44 weitergeleitet werden, ist es in einer anderen Ausführungsform auch möglich, daß die Ausgangssignale des Fuzzy-Logiksystems 56 zunächst in einem Zustandsautomaten 66 (Figur 1) weiterverarbeitet werden, bevor die endgültigen Erkennungssignale ES an die Funktionsmodule ausgegeben werden. Ein Beispiel eines solchen Zustandsautomaten ist in Figur 10 gezeigt.

Der Zustandsautomat nach Figur 10 dient zur Erkennung von Ein-und Ausschervorgängen. Gezeigt ist lediglich der Teil des Zustandsautomaten, der sich auf Ein- und Ausschervorgänge von der bzw. auf die linke Nebenspur bezieht. Ein nicht dargestellter Teil für die rechte Nebenspur ist symmetrisch zu Figur 10 aufgebaut.

Ein Basiszustand "0" entspricht der Situation, daß sich das Fahrzeug auf der eigenen Spur befindet. Ein anderer Basiszustand "20" entspricht der Situation, daß sich das Fahrzeug auf der linken Nebenspur befindet. Die Bezugszeichen der Zustände "0" und "20" sowie der im folgenden beschriebenen weiteren Zustände dienen zugleich als Relevanzparameter mit der Bedeutung, daß die Relevanz des Zustands für die Abstandsregelung um so größer ist je kleiner der Betrag des Relevanzparameters ist. Da sich in der Praxis oft mehrere Fahrzeuge im Umfeld des eigenen Fahrzeugs befinden werden, läßt sich der Relevanzparameter z.B. für eine Entscheidung nutzen, welche Fahrzeuge mit höchster Priorität verfolgt werden müssen.

Wenn ein Objekt erstmals geortet wurde und die Bedingungen für die Zuordnung zu einer Fahrspur erfüllt sind, wird das Fahrzeug anfänglich in einen der Basiszustände "0" oder "20" eingeordnet. Diese Einordnung kann mit Hilfe des Fuzzy-Logiksystems 56 erfolgen. Bei der Erkennung des Zustands "20" wird als Eingangsgröße die y-Koordinate für den rechten Rand des Fahrzeugs benutzt. Dies wird in Figur 10 in dem Zustand "20" durch einen kleinen Kreis am rechten Rand des symbolisch dargestellten Fahrzeugs angedeutet. Die entsprechende Ausgangsgröße des Fuzzy-Logiksystems ist in diesem Fall mit O_lL rE bezeichnet und hat die Bedeutung: "Objekt auf der linken Nebenspur, ermittelt anhand der rechten Fahrzeugkante". Wenn diese Ausgangsgröße größer ist als ein Schwellenwert SW_O_lL_rE, so geht der Zustandsautomat für dieses Fahrzeug in den Basiszustand "20". Diesen Zustand kann der Automat nur auf einem der Wege wieder verlassen, die in Figur 10 durch Pfeile angegeben sind.

Solange sich das Fahrzeug im Zustand "20" befindet, berechnet das Fuzzy-Logiksystem eine Ausgangsgröße E_rE mit der Bedeutung: "Einschervorgang erkannt auf der Grundlage der rechten Fahrzeugkante". Wenn diese Ausgangsgröße einen entsprechenden Schwellenwert SW_E_rE übersteigt, geht der Automat in einen Zwischenzustand "17" über. In diesem Zustand wird näher überprüft, ob tatsächlich ein Einschervorgang anzunehmen ist. Das Fuzzy-Logiksystem dient hier also gewissermaßen als Trigger für die nähere Überprüfung des Einschervorgangs.

Im Zustand "17" wird zunächst ein Zähler Count_E auf 0 gesetzt. Das Fuzzy-Logiksystem liefert unterdessen Ausgangsgrößen für die Zustände "Fahrzeug auf der eigenen Spur" (eL) und "Fahrzeug der linken Nebenspur" (1L). Als Eingangsgrößen können dabei je nach Ausführungsform die rechte Fahrzeugkante oder die Fahrzeugmitte oder eine Kombination hieraus benutzt werden sowie zusätzlich die Quergeschwindigkeit. Die Ausgangsgrößen werden mit dem Zähler Count_E gezählt, wobei die Ausgangsgröße eL erhöhend und die Ausgangsgröße 1L verringernd auf den Zählerstand wirkt.

Wenn sich das Fahrzeug weiter der eigenen Spur nähert, nimmt somit der Zählerstand zu, und bei Überschreitung eines Schwellenwertes SW_Count_E_1 geht der Automat in einen Zustand "13" über, der einen Einschervorgang kennzeichnet.

Wenn sich das Fahrzeug im Zustand "17" wieder von der eigenen Spur entfernt, nimmt der Zählerstand ab. Ebenso nimmt der Zählerstand ab, wenn das Fahrzeug konstant in der Nähe der linken Fahrspurmarkierung fährt, weil dann die verschwindende Quergeschwindigkeit für einen niedrigen Wert von eL und einen hohen Wert von 1L sorgt. Wenn der Zählerstand einen Schwellenwert SW_Count_E_Back unterschreitet, kehrt der Automat aus dem Zustand "17" in den Zustand "20" zurück.

Im Zustand "13" wird der Zähler Count_E erneut initialisiert, diesmal jedoch auf den Schwellenwert SW_Count_E_1, der beim Verlassen des Zustands "17" erreicht wurde. Der Zähler wird dann auf die gleiche Weise wie im Zustand "17" auf- oder abgezählt. Bei Überschreitung eines höheren Schwellenwertes SW_Count_E_2 geht der Automat aus dem Zustand "13" in den Zustand "0" über, d.h., das Fahrzeug hat endgültig die eigene Spur erreicht.

Wenn im Zustand "13" das Fahrzeug den Einschervorgang nicht vollendet, sondern wieder auf die linke Nebenspur ausschert, so nimmt der Zählerstand ab und erreicht schließlich einen Schwellenwert SW_Count_E_3. Dies veranlaßt den Zustandsautomaten, direkt in einen Ausscherzustand "7" überzugehen.

Die oben beschriebene Funktionsweise des Zustandsautomaten benutzt als Eingangsgröße maßgeblich die rechte Fahrzeugkante. Da jedoch die Messung der Koordinaten der Fahrzeugkanten mit einer gewissen Unsicherheit behaftet werden kann, ist das System redundant ausgelegt, und als Eingangsgröße wird zusätzlich auch die y-Koordinate der Fahrzeugmitte bzw. des Reflexionszentrums ausgewertet. In diesem Zusammenhang erzeugt das Fuzzy-Logiksystem im Zustand "20" sowie im Zustand "17" eine Ausgangsgröße E_C entsprechend der Erkennung eines Einschervorgangs auf der Grundlage der Fahrzeugmitte. Dies wird in Figur 10 durch einen kleinen Kreis hinter der Mitte der symbolischen Fahrzeugdarstellung angedeutet. Wenn die Ausgangsgröße E_C einen Schwellenwert SW_EC überschreitet, erfolgt aus dem Zustand "20" oder "17" ein direkter Übergang in dem Einscherzustand "13". Somit wird der Einschervorgang spätestens dann sicher erkannt, wenn die Fahrzeugmitte die Spurmarkierung überquert.

Figur 10 zeigt weiterhin noch einen Zustand "3", der einen Zwischenzustand zwischen den Zuständen "0" und "7" darstellt und das Gegenstück zu dem Zwischenzustand "17" bildet.

Auf analoge Weise wie bei dem Zustand "20" wird das Fahrzeug anfänglich in den Zustand "0" eingeordnet, wenn eine Ausgangsgröße O_eL_rE größer ist als ein Schwellenwert SW_O_eL_rE. Für die Feststellung eines eventuellen Ausschervorgangs wird dann die linke Fahrzeugkante überwacht, wie in dem Zustand "0" symbolisch dargestellt ist. Die Übergänge zu den Zuständen "3", "7", "13" und "20" sind symmetrisch zu den Übergängen vom Zustand "20" in die Zustände "17", "13", "7" und "0" und werden deshalb nicht noch einmal im einzelnen beschrieben. In den Bezeichnungen für Zähler, Ausgangsgrößen und Schwellenwerten tritt jeweils der Buchstabe "A" für "Ausscheren" an die Stelle des Buchstabens "E" für "Einscheren".

Für eine möglichst frühzeitige Erkennung der jeweiligen Verkehrssituation ist es bei den oben beschriebenen Ausführungsbeispielen auch möglich, ergänzend zu den Ausgangsgrößen des Fuzzy-Logiksystems 56 auch die zeitlichen Ableitungen dieser Ausgangsgrößen auszuwerten.

## Patentansprüche

1. Fahrerassistenzsystem für Kraftfahrzeuge, mit einem Ortungssystem (30, 32) zur Ortung von Fahrzeugen (48, 50) in der Umgebung des eigenen Fahrzeugs (34), mindestens einem Assistenzmodul (42, 44) zur Ausführung einer Asstistenzfunktion, und einer Erkennungseinrichtung (46) zur Erkennung mindestens einer typischen, für die Assistenzfunktion relevanten Verkehrssituation anhand von Ortungsdaten (OD) des Ortungssystems, **dadurch gekennzeichnet, daß** die Erkennungseinrichtung (46) ein Fuzzy-Logiksystem (56) aufweist.

2. Fahrerassistenzsystem nach Anspruch 1, **dadurch gekennzeichnet, daß** das Fuzzy-Logiksystem (56) eine Fuzzyfizierungseinheit (58) zur Fuzzifizierung der Ortungsdaten (OD), eine Logik-Einheit (60) zur logischen Verknüpfung der fuzzifizierten Daten, eine zugehörige Regelbasis (64), in der die zu erkennenden Verkehrssituationen und die bei der Erkennung anzuwendenden Kriterien in der Form von Regeln für die logische Verknüpfung gespeichert sind, sowie eine Defuzzifizierungseinheit (62) zur Umwandlung der Ergebnisse der logischen Verknüpfung in jeweils durch einen eindeutigen Zahlenwert gegebene Ausgangsgrößen (E, A, eL, rL) aufweist.

3. Fahrerassistenzsystem nach Anspruch 2, **dadurch gekennzeichnet, daß** die Regelbasis (64) Regeln für die Erkennung eines Einschervorgangs enthält.

4. Fahrerassistenzsystem nach Anspruch 2 oder 3, **dadurch gekennzeichnet, daß** die Regelbasis (64) Regeln für die Erkennung eines Auschschervorgangs, einer Situation, in der sich ein geortetes Fahrzeug (50) auf der eigenen Fahrspur befindet und/oder einer Situation enthält, in der sich ein geortetes Fahrzeug (48) auf einer Nebenspur befindet.

5. Fahrerassistenzsystem nach einem der Ansprüche 2 bis 4, **dadurch gekennzeichnet, daß** die Regelbasis (64) Regeln für die Erkennung einer Situation enthält, in der ein geortetes Hindernis von dem eigenen Fahrzeug umfahrbar ist.

6. Fahrerassistenzsystem nach einem der vorstehenden Ansprüche, **dadurch gekennzeichnet, daß** die Ortungsdaten (OD) Querablagen (y_C) und Quergeschwindigkeiten (vy_C) als Eingangsgrößen für das Fuzzy-Logiksystem (56) umfassen.

7. Ortungssystem nach einem der vorstehenden Ansprüche, **dadurch gekennzeichnet, daß** die Ortungsdaten (OD) Koordinaten (y_lE, y_rE) für die linken und rechten Kanten eines georteten Fahrzeugs (48) als Eingangsgrößen für das Fuzzy-Logiksystem (56) umfassen.

8. Fahrerassistenzsystem nach einem der vorstehenden Ansprüche, **dadurch gekennzeichnet, daß** das Ortungssystem (30, 32) dazu ausgebildet ist, Spurgrenzen (52, 54) zumindest der eigenen Fahrspur als Bezugsgrößen für die Querablagen der georteten Fahrzeuge zu erkennen.

9. Fahrerassistenzsystem nach einem der vorstehenden Ansprüche, **dadurch gekennzeichnet, daß** die Erkennungseinrichtung (46) einen Zustandsautomaten (66) zur weiteren Auswertung der Ausgangsgrößen des Fuzzy-Logiksystems (56) aufweist.

10. Fahrerassistenzsystem nach Anspruch 9, **dadurch gekennzeichnet, daß** das Zustandsautomat (66) dazu ausgebildet ist, eine auf einen Einschervorgang hinweisende Ausgangsgröße (E__C; E__rE) des Fuzzy-Logiksystems (56) als Auslösesignal aufzunehmen und daraufhin weitere Kriterien für die Erkennung des Einschervorgangs zu überprüfen.

11. Fahrerassistenzsystem nach Anspruch 9 oder 10, **dadurch gekennzeichnet, daß** der Zustandsautomat redundant ausgebildet ist in dem Sinne, daß er Ausgangsgrößen des Fuzzy-Logiksystems, die einerseits auf Ortungsdaten für die jeweilige Fahrzeugmitte und andererseits auf Ortungsdaten für die linken und rechten Kanten des Fahrzeugs basieren, parallel auswertet.
